# EUROPÄISCHE PATENTANMELDUNG

(11) **EP 1 378 281 A1**
(43) Veröffentlichungstag der Anmeldung: **07.01.2004**
(21) Anmeldenummer: 03010749.4
(22) Anmeldetag: 14.05.2003
(51) Int. Cl.: B01D 3/00, B01D 3/22

(54) **Bodenkolonne**

(30) Priorität: 05.07.2002 DE 10230325
(71) Anmelder: JULIUS MONTZ GmbH, D-40723 Hilden (DE)
(72) Erfinder: Zich, Egon, 42799 Leichlingen (DE); Jansen, Helmut, 41542 Dormagen (DE); Rietfort, Thomas, 46236 Bottrop (DE); Kaibel, Björn, 40723 Hilden (DE)
(74) Vertreter: COHAUSZ DAWIDOWICZ HANNIG & PARTNER

(57) **Zusammenfassung**

Die Erfindung betrifft eine Bodenkolonne mit Stoffaustauschböden und Wärmeaustauschböden und einem über dem Boden angeordnetem Deentrainmentelement. Zwischen dem Boden und dem Deentrainmentelement ist/sind ein Vorabscheider insbesondere in Form von Blechen, Profilen, Folien und/oder mindestens eines Rostes im Abstand zum Stoffaustauschboden angeordnet.

## Beschreibung

Die Erfindung betrifft eine Bodenkolonne mit Stoffaustauschböden und einem über dem Boden angeordnetem Deentrainmentelement.

Bodenkolonnen werden für eine Vielzahl von Wärme- und/oder Stoffaustauschprozesse zwischen Flüssigkeiten und Gasen verwendet. Die Flüssigkeit strömt über den Boden und wird nach oben zu einer Sprudelschicht durch das Gas verwirbelt, das von unten nach oben durch Öffnungen im Boden hindurchtritt. Damit die Sprudelschicht nicht bis zum darüberliegenden Boden gelangt, ist es aus der US 5 262 094 und der US 5 762 668 bekannt, unterhalb des Bodens ein Deentrainmentelement (Demister, Abscheidepaket) anzuordnen. Hierbei hat es sich aber gezeigt, daß eine solche Anordnung nicht immer ausreicht.

Aufgabe der Erfindung ist es, bei möglichst geringem Druckverlust in der Kolonne die Sprudelschicht noch weiter zu begrenzen und die Abstände zwischen den Böden weiter zu verringern.

Diese Aufgabe wird erfindungsgemäß dadurch gelöst, daß zwischen dem Boden und dem Deentrainmentelement ein Vorabscheider insbesondere in Form von Blechen, Profilen und/oder mindestens eines Rostes im Abstand zum Stoffaustauschboden angeordnet ist/sind.

Ein solcher Vorabscheider zwischen dem Deentrainmentelement und dem Boden sorgt dafür, daß das Deentrainmentelement nicht überlastet wird, bzw. nicht so stark gebaut werden muß, daß es zu einem zu großem Druckverlust in der Kolonne kommt. Das Deentrainmentelement und der Vorabscheider ergänzen sich optimal und der Abstand der Böden zueinander kann weiter verringert werden bei gleichem oder höherem Wirkungsgrad. Eine Rückvermischung der Flüssigkeit wird sicher verhindert und die Flüssigkeitsführung auf den Böden wird verbessert. Ein Nachrüsten mit Vorabscheidern ist jederzeit möglich.

Vorteilhafte Ausgestaltungen der Erfindung sind in den Unteransprüchen aufgeführt.

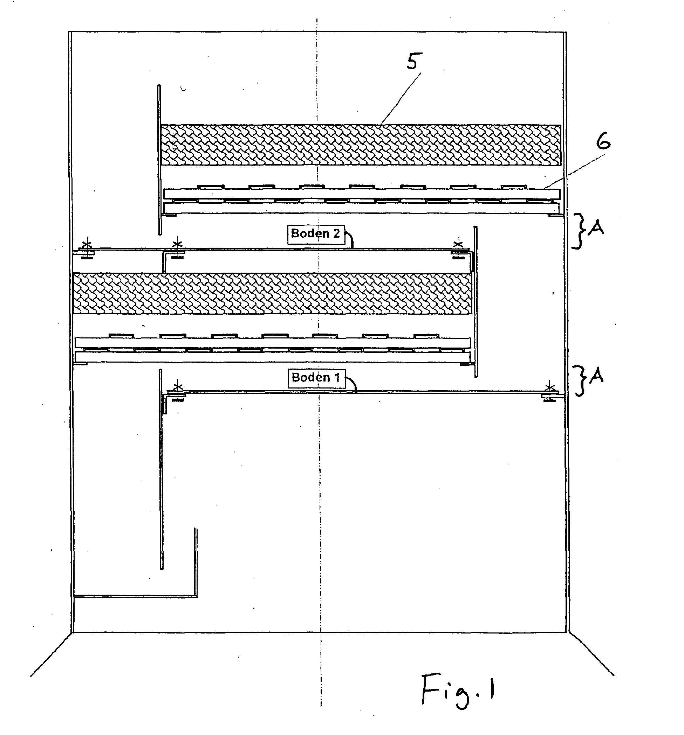

Ausführungsbeispiele der Erfindung sind in den Zeichnungen in senkrechten Schnitten dargestellt und werden im folgenden näher beschrieben. Es zeigen
- Figur 1: einen Ausschnitt aus einem ersten Ausführungsbeispiel,
- Figur 2: einen Ausschnitt aus einem zweiten Ausführungsbeispiel.

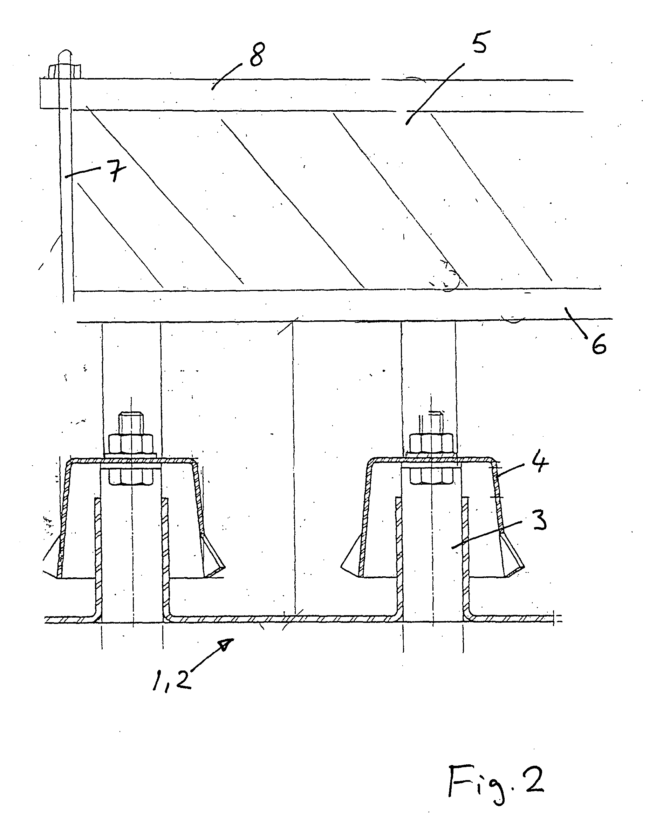

In einer Bodenkolonne sind Stoffaustauschböden (Boden 1, Boden 2) übereinander angeordnet. Die auf den Böden befindliche Flüssigkeit wird durch von unten nach oben durch die Bodenkolonne strömende Dämpfe oder Gase nach oben hin verwirbelt, wobei in den Böden Durchtrittsöffnungen 3 insbesondere mit Abdeckungen 4 angeordnet sind (siehe Figur 2). Hierdurch bildet sich oberhalb der Böden 1,2 jeweils eine hohe Sprudelschicht, die durch ein Deentrainmentelement 5 niedergehalten werden, die in einem Abstand oberhalb der Böden mittels Stangen 7 und Niederhaltern 8 befestigt sind. Die Deentrainmentelemente 6 bestehen aus einer geordneten Packungsstruktur, welche eine Vielzahl etwa senkrecht angeordneter mit ihren Seitenflächen aneinander liegender gewellter Platten (bzw. Bändern) aufweist, deren dicht nebeneinanderliegende Rippen von oben nach unten schräg oder bogenförmig verlaufen, wobei die Rippen zwei aneinanderliegender Platten einander kreuzen. Diese Elemente verhindern die ungehinderte Ausbreitung der Sprudelschicht und einen unkontrollierten Flüssigkeitsmitriss.

Zusätzlich zu dem Deentrainmentelement 5 ist zwischen dem jeweiligen Deentrainmentelement und dem Boden ein Vorabscheider 6 angeordnet, der parallel zum Deentrainmentelement bzw. Boden liegt und mit dem Boden einen Abstand A bildet. Dieser Vorabscheider 6 kann auch direkt unterhalb des Deentrainmentelement 5 ohne Abstand zum Deentrainmentelement angeordnet sein, wie dies Figur 2 zeigt.

Die Vorabscheider 5 bestehen vorzugsweise aus Blechen, Profilen und/oder Rosten. Die Bleche können gewellte Platten oder Bänder bilden und die Bleche und/oder Platten sind schichtweise und einander kreuzend angeordnet.

Untersuchungen zeigen eine mögliche Durchsatzsteigerung von bis zu 50% abhängig von der Ausformung und Neigung der Strömungskanäle und der Anordnung der Pakete über dem Boden. Durch den einfachen Aufbau der Elemente ist eine Nachrüstung von bestehenden Bodenkolonnen ohne gravierende Änderungen bei fast allen Böden möglich. Sehr oft gelingt es sogar, die Einbauten auf die vorhandenen Befestigungselemente anzubinden.

## Patentansprüche

1. Bodenkolonne mit Stoffaustauschböden und Wärmeaustauschböden (1,2) und einem über dem Boden angeordnetem Deentrainmentelement (5), **dadurch gekennzeichnet, dass** zwischen dem Boden und dem Deentrainmentelement (5) ein Vorabscheider (6) insbesondere in Form von Blechen, Profilen, Folien und/oder mindestens eines Rostes im Abstand zum Stoffaustauschboden angeordnet ist/sind.

2. Bodenkolonne nach Anspruch 1,**dadurch gekennzeichnet, dass** die Bleche, Profile, Folien und/oder der Rost im Abstand zum Deentrainmentelement (5) angeordnet ist/sind.

3. Bodenkolonne nach Anspruch 1 oder 2, **dadurch gekennzeichnet, dass** die Bleche, Profile, Folien und/oder der Rost parallel zum Boden (1,2) angeordnet ist/sind.

4. Bodenkolonne nach einem der vorherigen Ansprüche, **dadurch gekennzeichnet, dass** die Bleche gewellte Platten oder Bänder bilden.

5. Bodenkolonne nach einem der vorherigen Ansprüche, **dadurch gekennzeichnet, dass** die Bleche und/oder Platten schichtweise und einander kreuzend angeordnet sind.

6. Bodenkolonne nach einem der vorherigen Ansprüche, **dadurch gekennzeichnet, dass** das Deentrainmentelement (5) und die Bleche, Profile und/oder der Rost an dem Boden über diesem oder an dem Deentrainmentelement (5) unterhalb diesem in einem Abstand befestigt ist/sind.

## Geänderte Patentansprüche

### Geänderte Patentansprüche gemäss Regel 86(2) EPÜ.

**1.** Bodenkolonne mit Stoffaustauschböden und Wärmeaustauschböden (1,2) und einem über dem Boden angeordnetem Deentrainmentelement (5), **dadurch gekennzeichnet, dass** zwischen dem Boden und dem Deentrainmentelement (5) ein Vorabscheider (6) insbesondere in Form von Blechen, Profilen, Folien und/oder mindestens eines Rostes im Abstand zum Stoffaustauschboden angeordnet ist/sind und dass die Bleche und/oder Platten schichtweise und einander kreuzend angeordnet sind.

**2.** Bodenkolonne nach Anspruch 1,**dadurch gekennzeichnet, dass** die Bleche, Profile, Folien und/oder der Rost im Abstand zum Deentrainmentelement (5) angeordnet ist/sind.

**3.** Bodenkolonne nach Anspruch 1 oder 2, **dadurch gekennzeichnet, dass** die Bleche, Profile, Folien und/oder der Rost parallel zum Boden (1,2) angeordnet ist/sind.

**4.** Bodenkolonne nach einem der vorherigen Ansprüche, **dadurch gekennzeichnet, dass** die Bleche gewellte Platten oder Bänder bilden.

**5.** Bodenkolonne nach einem der vorherigen Ansprüche, **dadurch gekennzeichnet, dass** das Deentrainmentelement (5) und die Bleche, Profile und/oder der Rost an dem Boden über diesem oder an dem Deentrainmentelement (5) unterhalb diesem in einem Abstand befestigt ist/sind.
